# EUROPEAN PATENT APPLICATION

(11) **EP 4 843 888 A1**
(43) Date of publication of application: **25.11.2026**
(21) Application number: 26179707.0
(22) Date of filing: 19.05.2026
(51) Int. Cl.: B64C 39/10, B64D 27/14, B64D 27/00

(54) **BLENDED WING BODY AIRCRAFT SYSTEM**

(30) Priority: 19.05.2025 US 202519212169
(71) Applicant: RTX Corporation, Farmington, CT 06032 (US)
(72) Inventor: KUPRATIS, Daniel B., Wallingford, 06492 (US)
(74) Representative: Dehns

(57) **Abstract**

An aircraft system (20) includes an airframe (22), a first side propulsion system (24B), a second side propulsion system (24C) and a center propulsion system (24A). The airframe (22) includes a body (26), a first wing (28A) and a second wing (28B). The body (26) extends longitudinally along a centerline (32) from a forward end (34) to an aft end (36). The first wing (28A) is connected to the body (26) at a first side (42A). The second wing (28B) is connected to the body (26) at a second side (42B). The first side propulsion system (24B) is mounted to the airframe (22) to a first side of the centerline (32). The second side propulsion system (24C) is mounted to the airframe (22) to a second side of the longitudinal centerline (32). The center propulsion system (24A) is mounted to the airframe (22) and laterally aligned with the centerline (32). The center propulsion system (24A) is longitudinally offset from the first side propulsion system (24B) and the second side propulsion system (24C) towards the forward end (34) of the airframe (22).

## Description

### BACKGROUND

### 1. Technical Field

This invention relates generally to an aircraft and, more particularly, to a blended wing body aircraft.

### 2. Background Information

Various types and configurations of blended wing body aircraft are known in the art. While these known blended wing body aircraft have various benefits, there is still room in the art for improvement.

### SUMMARY

According to one aspect of the present invention, there is provided an aircraft system that includes an airframe, a first side propulsion system, a second side propulsion system and a center propulsion system. The airframe includes a body, a first wing and a second wing. The body extends longitudinally along a longitudinal centerline from a forward end of the airframe to an aft end of the airframe. The first wing is connected to the body at a first side of the body. The second wing is connected to the body at a second side of the body that is laterally opposite the first side of the body. The first side propulsion system is mounted to the airframe to a first side of the longitudinal centerline. The second side propulsion system is mounted to the airframe to a second side of the longitudinal centerline that is laterally opposite the first side of the longitudinal centerline. The center propulsion system is mounted to the airframe and laterally aligned with the longitudinal centerline. The center propulsion system is longitudinally offset from the first side propulsion system and the second side propulsion system towards the forward end of the airframe. A longitudinal distance between the center propulsion system and the forward end of the airframe is greater than a longitudinal distance between the center propulsion system and the aft end of the airframe.

According to another aspect of the present invention, there is provided an aircraft system that includes a blended wing body airframe, a first propulsion system, a second propulsion system and a first vane. The blended wing body airframe includes a body, a first wing and a second wing. The body extends longitudinally along a longitudinal centerline from a forward end of the blended wing body airframe to an aft end of the blended wing body airframe. The first wing is connected to the body at a first side of the body. The second wing is connected to the body at a second side of the body that is laterally opposite the first side of the body. The first propulsion system is mounted to the body. The second propulsion system is mounted to the body. The first vane is mounted to the body. The first vane is disposed laterally between and longitudinally overlaps the first propulsion system and the second propulsion system. The blended wing body airframe includes a wing span measured laterally between a tip of the first wing and a tip of the second wing. An aft end of the first vane at a connection between the first vane and the body is longitudinally spaced from the aft end of the blended wing body airframe by a first longitudinal distance. The first longitudinal distance is divided by the wing span equal to or less than 0.10.

According to another aspect of the present invention, there is provided an aircraft system that includes a blended wing body airframe, a first propulsion system, a second propulsion system and a first vane. The blended wing body airframe includes a body, a first wing and a second wing. The body extends longitudinally along a longitudinal centerline from a forward end of the blended wing body airframe to an aft end of the blended wing body airframe. The first wing is connected to the body at a first side of the body. The second wing is connected to the body at a second side of the body that is laterally opposite the first side of the body. The first propulsion system is mounted to the body. The second propulsion system is mounted to the body. The first vane is mounted to the body. The first vane is disposed laterally between and longitudinally overlaps the first propulsion system and the second propulsion system. A first reference line is coincident with a forward end of the second propulsion system and a forward end of the first vane in a reference plane including the first reference line. The first reference line is angularly offset from the longitudinal centerline within the reference plane by a first angle between thirty degrees and ninety-five degrees.

Optionally, and in accordance with any of the above, the aircraft system may also include a third propulsion system and a second vane. The third propulsion system may be mounted to the body. The second vane may be mounted to the body. The second vane may be disposed laterally between and may longitudinally overlap the second propulsion system and the third propulsion system with the second propulsion system laterally between the first vane and the second vane. A second reference line may be coincident with a forward end of the second propulsion system and a forward end of the second vane in the reference plane including the second reference line. The second reference line may be angularly offset from the longitudinal centerline within the reference plane by a second angle between thirty degrees and ninety-five degrees.

Optionally, and in accordance with any of the above, the aircraft system may also include a third propulsion system and a second vane. The third propulsion system may be mounted to the body. The second vane may be mounted to the body. The second vane may be disposed laterally between and may longitudinally overlap the second propulsion system and the third propulsion system with the second propulsion system laterally between the first vane and the second vane. An aft end of the second vane at a connection between the second vane and the body may be longitudinally spaced from the aft end of the blended wing body airframe by a second longitudinal distance. The second longitudinal distance may be divided by the wing span equal to or less than 0.10.

Optionally, and in accordance with any of the above, the airframe may be configured as a blended wing body airframe.

Optionally, and in accordance with any of the above, the center propulsion system may be mounted to the body.

Optionally, and in accordance with any of the above, the first side propulsion system and the second side propulsion system may be mounted to the body.

Optionally, and in accordance with any of the above, the first side propulsion system, the second side propulsion system and/or the center propulsion system may each include an open propulsor rotor.

Optionally, and in accordance with any of the above, a centerline of the center propulsion system may be parallel with a centerline of the first side propulsion system and/or a centerline of the second side propulsion system.

Optionally, and in accordance with any of the above, A centerline of the center propulsion system may be angularly offset from a centerline of the first side propulsion system by a first acute angle. In addition or alternatively, the centerline of the center propulsion system may be angularly offset from a centerline of the second side propulsion system by a second acute angle.

Optionally, and in accordance with any of the above, a centerline of the first side propulsion system may be angularly offset from the longitudinal centerline by a first acute offset angle equal to or less than thirty-five degrees. In addition or alternatively, a centerline of the second side propulsion system may be angularly offset from the longitudinal centerline by a second acute offset angle equal to or less than thirty-five degrees.

Optionally, and in accordance with any of the above, the airframe may have a wing span measured laterally between a tip of the first wing and a tip of the second wing. An aft end of the first side propulsion system may be longitudinally spaced from the aft end of the airframe by a first longitudinal distance. An aft end of the second side propulsion system may be longitudinally spaced from the aft end of the airframe by a second longitudinal distance. The first longitudinal distance divided by the wing span may be equal to or less than 0.01. In addition or alternatively, the second longitudinal distance divided by the wing span may be equal to or less than 0.01.

Optionally, and in accordance with any of the above, the airframe may have a wing span measured laterally between a tip of the first wing and a tip of the second wing. A forward end of the first side propulsion system may be longitudinally spaced from the aft end of the airframe by a first longitudinal distance. A forward end of the second side propulsion system may be longitudinally spaced from the aft end of the airframe by a second longitudinal distance. The first longitudinal distance divided by the wing span may be between 0.05 and 0.20. In addition or alternatively, the second longitudinal distance divided by the wing span may be between 0.05 and 0.20.

Optionally, and in accordance with any of the above, the airframe may have a wing span measured laterally between a tip of the first wing and a tip of the second wing. A forward end of the center propulsion system may be longitudinally spaced from the aft end of the airframe by a longitudinal distance. The longitudinal distance divided by the wing span may be between 0.05 and 0.30.

Optionally, and in accordance with any of the above, the airframe may have a wing span measured laterally between a tip of the first wing and a tip of the second wing. A centerline of the center propulsion system may be laterally spaced from a centerline of the first side propulsion system by a first lateral distance. A centerline of the center propulsion system may be laterally spaced from a centerline of the second side propulsion system by a second lateral distance. The first lateral distance divided by the wing span may be between 0.05 and 0.15. In addition or alternatively, the second lateral distance divided by the wing span may be between 0.05 and 0.15.

Optionally, and in accordance with any of the above, the airframe may also include a first vane and/or a second vane. The first vane may be disposed laterally between the first side propulsion system and the center propulsion system. The first vane may longitudinally overlap the first side propulsion system and the center propulsion system. The second vane may be disposed laterally between the second side propulsion system and the center propulsion system. The second vane may longitudinally overlap the first side propulsion system and the center propulsion system.

Optionally, and in accordance with any of the above, a centerline of the first vane may be parallel with a centerline of the second vane.

Optionally, and in accordance with any of the above, a centerline of the first vane may be angularly offset from the longitudinal centerline by a first acute offset angle equal to or less than thirty-five degrees. A centerline of the second vane may be angularly offset from the longitudinal centerline by a second acute offset angle equal to or less than thirty-five degrees.

Optionally, and in accordance with any of the above, the airframe may have a wing span measured laterally between a tip of the first wing and a tip of the second wing. An aft end of the first vane may be longitudinally spaced from the aft end of the airframe by a first longitudinal distance. An aft end of the second vane may be longitudinally spaced from the aft end of the airframe by a second longitudinal distance. The first longitudinal distance divided by the wing span may be equal to or less than 0.10. In addition or alternatively, the second longitudinal distance divided by the wing span is equal to or less than 0.10.

Optionally, and in accordance with any of the above, a forward end of the first vane may be longitudinally spaced from the aft end of the airframe by a forward end vane offset distance. An aft end of the first vane may be longitudinally spaced from the aft end of the airframe by an aft end vane offset distance. A difference between the forward end vane offset distance and the aft end vane offset distance may be equal to a first difference value. A forward end of the first side propulsion system may be longitudinally spaced from the aft end of the airframe by a forward end propulsion system offset distance. An aft end of the first side propulsion system may be longitudinally spaced from the aft end of the airframe by an aft end propulsion system offset distance. A difference between the forward end propulsion system offset distance and the aft end propulsion system offset distance may be equal to a second difference value. The second difference value may be greater than the first difference value.

Optionally, and in accordance with any of the above, a forward end of the first vane may be longitudinally spaced from the aft end of the airframe by a forward end vane offset distance. An aft end of the first vane may be longitudinally spaced from the aft end of the airframe by an aft end vane offset distance. A difference between the forward end vane offset distance and the aft end vane offset distance may be equal to a first difference value. A forward end of the first side propulsion system may be longitudinally spaced from the aft end of the airframe by a forward end propulsion system offset distance. An aft end of the first side propulsion system may be longitudinally spaced from the aft end of the airframe by an aft end propulsion system offset distance. A difference between the forward end propulsion system offset distance and the aft end propulsion system offset distance may be equal to a second difference value. The second difference value may be less than or equal to the first difference value.

Optionally, and in accordance with any of the above, a forward end of the second vane may be longitudinally spaced from the aft end of the airframe by a second forward end vane offset distance. An aft end of the second vane may be longitudinally spaced from the aft end of the airframe by a second aft end vane offset distance. A difference between the second forward end vane offset distance and the second aft end vane offset distance may be equal to a third difference value. A forward end of the second side propulsion system may be longitudinally spaced from the aft end of the airframe by a second forward end propulsion system offset distance. An aft end of the second side propulsion system may be longitudinally spaced from the aft end of the airframe by a second aft end propulsion system offset distance. A difference between the second forward end propulsion system offset distance and the second aft end propulsion system offset distance may be equal to a fourth difference value. The fourth difference value may be greater than the third difference value.

Optionally, and in accordance with any of the above, the airframe may have a wing span measured laterally between a tip of the first wing and a tip of the second wing. A centerline of the first vane may be laterally spaced from the longitudinal centerline by a first lateral distance. A centerline of the second vane may be laterally spaced from the longitudinal centerline by a second lateral distance. The first lateral distance divided by the wing span may be between 0.03 and 0.10. In addition or alternatively, the second lateral distance divided by the wing span may be between 0.03 and 0.10.

Optionally, and in accordance with any of the above, a first reference line may be coincident with a forward end of the center propulsion system, a forward end of the first side propulsion system and a forward end of the first vane in a reference plane including the first reference line. In addition or alternatively, a reference line may be coincident with a forward end of the center propulsion system, a forward end of the second side propulsion system and a forward end of the second vane in the reference plane including the second reference line.

Optionally, and in accordance with any of the above, a first reference line may be coincident with a forward end of the center propulsion system and a forward end of the first side propulsion system in a reference plane including the first reference line. A forward end of the first vane may be longitudinally offset from the first reference line in the reference plane. In addition or alternatively, a second reference line may be coincident with a forward end of the center propulsion system and a forward end of the second side propulsion system in the reference plane including the second reference line. A forward end of the second vane may be longitudinally offset from the second reference line in the reference plane.

Optionally, and in accordance with any of the above, a first reference line may be coincident with a forward end of the center propulsion system and a forward end of the first vane in a reference plane including the first reference line. A forward end of the first side propulsion system may be longitudinally offset from the first reference line in the reference plane. In addition or alternatively, a second reference line may be coincident with a forward end of the center propulsion system and a forward end of the second vane in the reference plane including the second reference line. A forward end of the second side propulsion system may be longitudinally offset from the second reference line in the reference plane.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a plan view illustration of an aircraft.
FIG. 2 is a side view illustration of the aircraft.
FIG. 3 is a rear end view illustration of the aircraft.
FIG. 4 is a partial side view illustration of a section of the aircraft along a side of an aircraft vane.
FIG. 5 is a sectional illustration of the aircraft vane with a symmetric arrangement.
FIG. 6 is a plan view illustration of a portion of the aircraft.
FIG. 7 is a plan view illustration of a portion of the aircraft with another arrangement of propulsion systems and aircraft vanes.
FIG. 8 is a partial sectional schematic illustration of an exemplary propulsion system.
FIG. 9 is a sectional schematic illustration of another exemplary propulsion system.
FIG. 10 is a plan view illustration of a portion of the aircraft with another arrangement of propulsion systems and aircraft vanes.
FIGS. 11A and 11B are plan view illustrations of a portion of the aircraft with other various arrangements of propulsion systems and aircraft vanes.
FIG. 12 is a sectional illustration of the aircraft vane with a cambered arrangement.
FIG. 13 is a plan view illustration of a portion of the aircraft with an arrangement of propulsion systems without aircraft vanes.
FIG. 14 is a plan view illustration of a portion of the aircraft with still another arrangement of propulsion systems and aircraft vanes.

### DETAILED DESCRIPTION

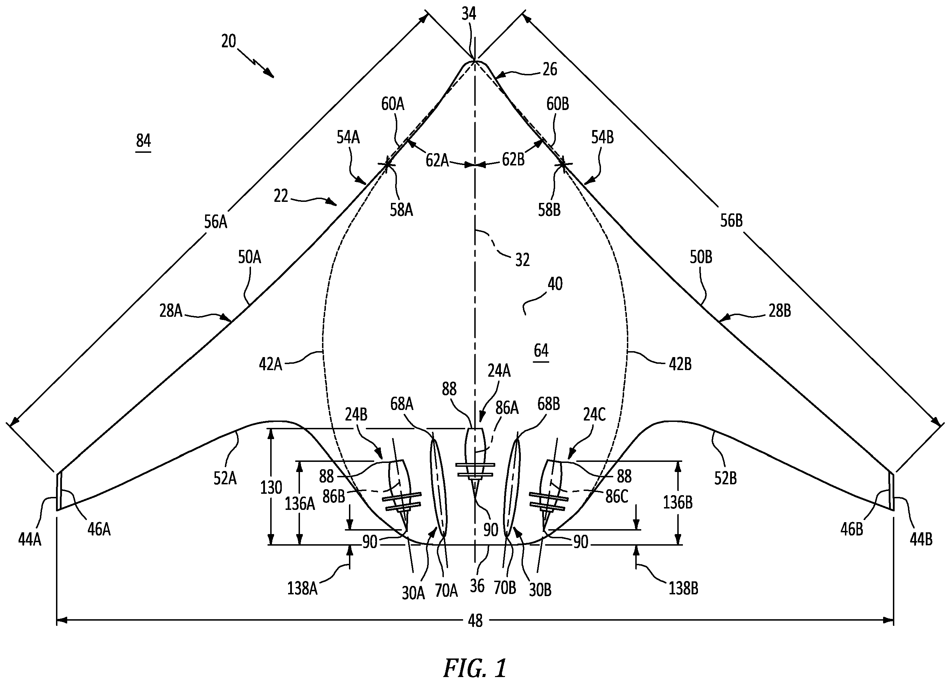

FIG. 1 illustrates a blended wing body (BWB) aircraft 20. This BWB aircraft 20 includes an airframe 22 and a plurality of propulsion systems 24A-C (generally referred to as "24"). The aircraft airframe 22 includes a body 26 (e.g., a fuselage), one or more wings 28A and 28B (generally referred to as "28") and one or more vanes 30A and 30B (generally referred to as "30"); e.g., vertical stabilizers.

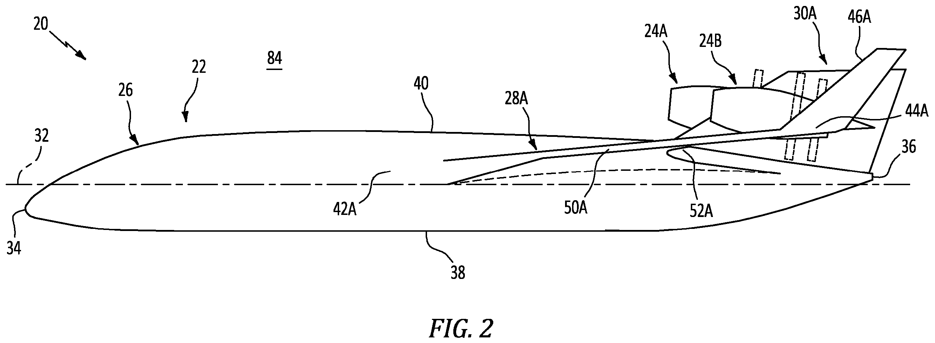

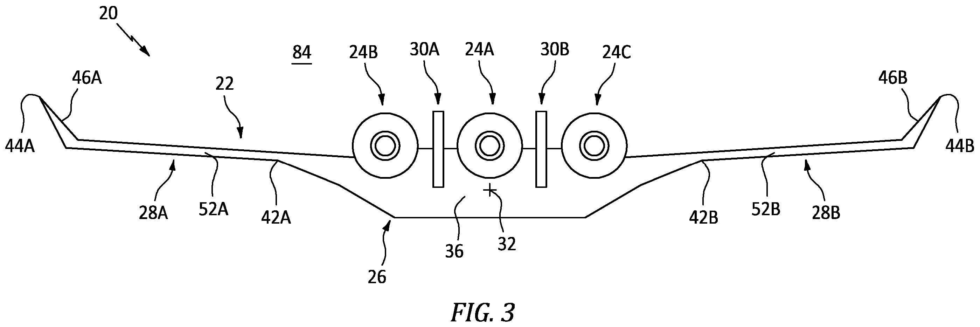

The aircraft body 26 of FIG. 1 extends longitudinally along a longitudinal centerline 32 from an upstream, forward end 34 (e.g., a tip end) of the BWB aircraft 20 and its members 22 and 26 to a downstream, aft end 36 (e.g., a tail end) of the BWB aircraft 20 and its members 22 and 26. The longitudinal centerline 32 may be a centerline axis of the BWB aircraft 20, the aircraft airframe 22 and/or the aircraft body 26. Referring to FIG. 2, the longitudinal centerline 32 may be substantially (e.g., within +/- five or ten degrees) or completely parallel with a horizon line when, for example, the BWB aircraft 20 is flying in level flight and/or the BWB aircraft 20 is on ground. The aircraft body 26 extends vertically between and to opposing vertical bottom and top sides 38 and 40 of the aircraft body 26. The body bottom side 38 is vertically below the body top side 40 with respect to a gravitational direction when, for example, the BWB aircraft 20 is flying in level flight and/or the BWB aircraft 20 is on the ground. Referring to FIGS. 1 and 3, the aircraft body 26 extends laterally between and to opposing lateral sides 42A and 42B (generally referred to as "42") of the aircraft body 26.

The aircraft wings 28A and 28B of FIGS. 1 and 3 are arranged to the opposing lateral sides 42A and 42B of the aircraft body 26. Each of the aircraft wings 28 is connected to (e.g., fixed to) and/or extends out from the aircraft body 26. Each of the aircraft wings 28A, 28B projects spanwise along a span line of the respective aircraft wing 28A, 28B out from the aircraft body 26, at the respective body lateral side 42A, 42B, to a spanwise distal tip 44A, 44B (generally referred to as "44") of the respective aircraft wing 28A, 28B. At the wing tip 44A, 44B, the respective aircraft wing 28A, 28B may (or may not) be configured with a winglet 46A, 46B. Referring to FIG. 1, the BWB aircraft 20 and its aircraft airframe 22 have a wing span 48 measured laterally between the opposing wing tips 44. Each of the aircraft wings 28A, 28B extends longitudinally along a mean line of the respective aircraft wing 28A, 28B from a leading edge 50A, 50B (generally referred to as "50") of the respective aircraft wing 28A, 28B to a trailing edge 52A, 52B (generally referred to as "52") of the respective aircraft wing 28A, 28B. The wing leading edge 50 of FIG. 1, at a base of the respective aircraft wing 28, is longitudinally spaced aft, downstream from the aircraft forward end 34. The wing trailing edge 52 of FIG. 1, at the wing base, is longitudinally spaced forward, upstream from the aircraft aft end 36. The present disclosure, however, is not limited to such an exemplary aircraft wing arrangement.

The aircraft body 26 and each aircraft wing 28A, 28B of FIG. 1 collectively form a leading edge 54A, 54B (generally referred to as "54") of the aircraft airframe 22 to a respective lateral side of the longitudinal centerline 32. A side length 56A, 56B (generally referred to as "56") of the aircraft airframe 22 along each airframe leading edge 54A, 54B extends from the aircraft forward end 34 to the respective wing tip 44A, 44B, at the respective wing leading edge 50A, 50B. A reference point 58A, 58B (generally referred to as "58") is disposed along each airframe leading edge 54A, 54B at an intermediate location along the respective airframe leading edge 54A, 54B; e.g., one-third (1/3), one-quarter (1/4) or one-fifth (1/5) of the respective side length 56 from the aircraft forward end 34 to the respective wing tip 44. A straight-line reference line 60A, 60B (generally referred to as "60") projects out from the aircraft forward end 34 through the respective leading edge reference point 58A, 58B. This leading edge reference line 60A, 60B is angularly offset from the longitudinal centerline 32 by an offset angle 62A, 62B (generally referred to as "62"); e.g., an aircraft sweep angle. This offset angle 62 may be a non-zero acute angle between, for example, twenty degrees (20°) and sixty-five degrees (65°) inclusive; e.g., between thirty degrees (30°) and forty-five degrees (45°) inclusive.

The aircraft vanes 30 of FIGS. 1 and 3 are disposed along the body top side 40 at (e.g., on, adjacent or proximate) the aircraft aft end 36. The first aircraft vane 30A is arranged laterally between the center propulsion system 24A and the first side propulsion system 24B. This first aircraft vane 30A longitudinally and vertically overlaps the center propulsion system 24A and/or the first side propulsion system 24B. The second aircraft vane 30B is arranged laterally between the center propulsion system 24A and the second side propulsion system 24C, with the center propulsion system 24A laterally between the aircraft vanes 30A and 30B. This second aircraft vane 30B longitudinally and vertically overlaps the center propulsion system 24A and/or the second side propulsion system 24C.

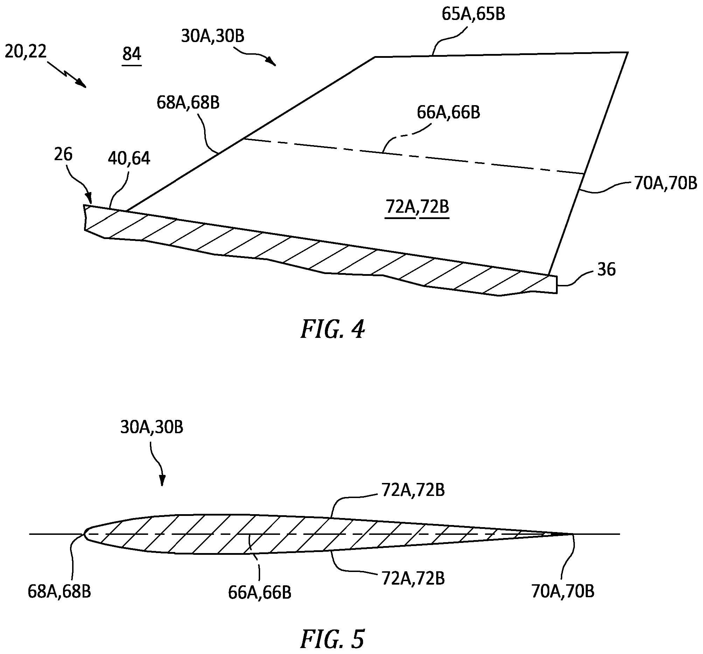

Referring to FIG. 4, each aircraft vane 30 is connected to (e.g., fixed to) the aircraft body 26 at the body top side 40. The aircraft vane 30 of FIG. 4 projects spanwise along a span line of the aircraft vane 30 (e.g., vertically) away from the aircraft body 26 and its body top side 40. More particularly, the aircraft vane 30A, 30B of FIG. 4 projects spanwise and vertically out from an exterior surface 64 (e.g., an outermost aerodynamic surface) of the aircraft body 26 at the body top side 40 to a spanwise distal tip 65A, 65B (generally referred to as "65") of the respective aircraft vane 30A, 30B. The aircraft vane 30A, 30B of FIG. 4 extends longitudinally along a centerline 66A, 66B (generally referred to as "66") of the respective aircraft vane 30A, 30B from a leading edge at a forward end 68A, 68B (generally referred to as "68") of the respective aircraft vane 30A, 30B to a trailing edge at an aft end 70A, 70B (generally referred to as "70") of the respective aircraft vane 30A, 30B. This vane centerline 66 may be a mean line of the respective aircraft vane 30 such as a chord line where that aircraft vane 30 is symmetric or a camber line where that aircraft vane 30 is cambered. Referring to FIG. 5, each aircraft vane 30A, 30B extends laterally (e.g., perpendicular to the respective vane centerline 66) between and to opposing lateral sides 72A, 72B (generally referred to as "72") of the respective aircraft vane 30A, 30B. These vane lateral sides 72 extend longitudinally along the respective vane centerline 66 between and meet at the vane forward end 68 and the vane aft end 70. Referring to FIG. 4, each of the vane elements 68, 70 and 72 extends spanwise from a base of the respective aircraft vane 30 at the body top side 40 to the respective vane tip 65.

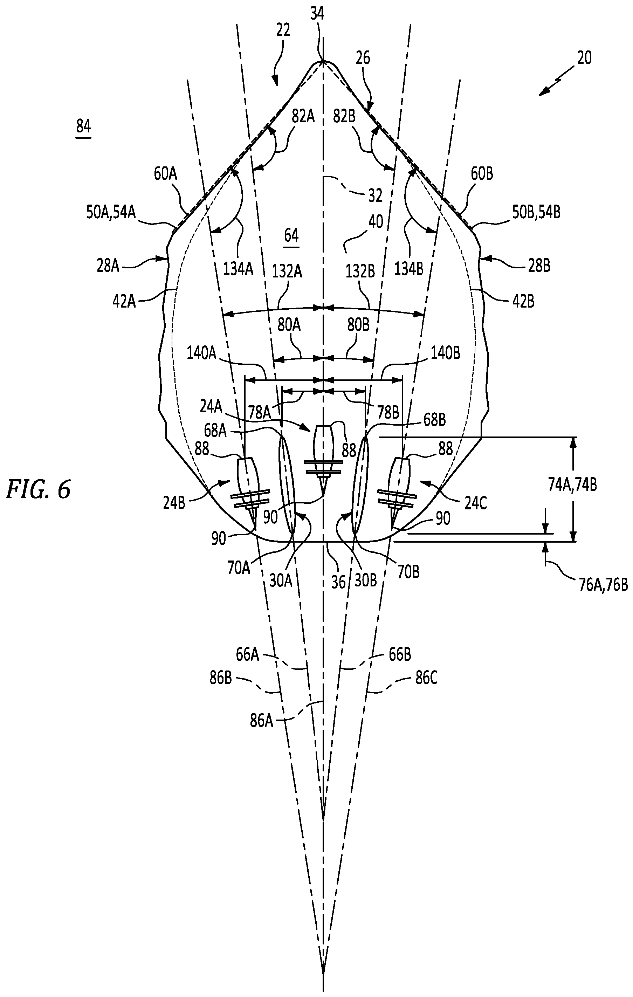

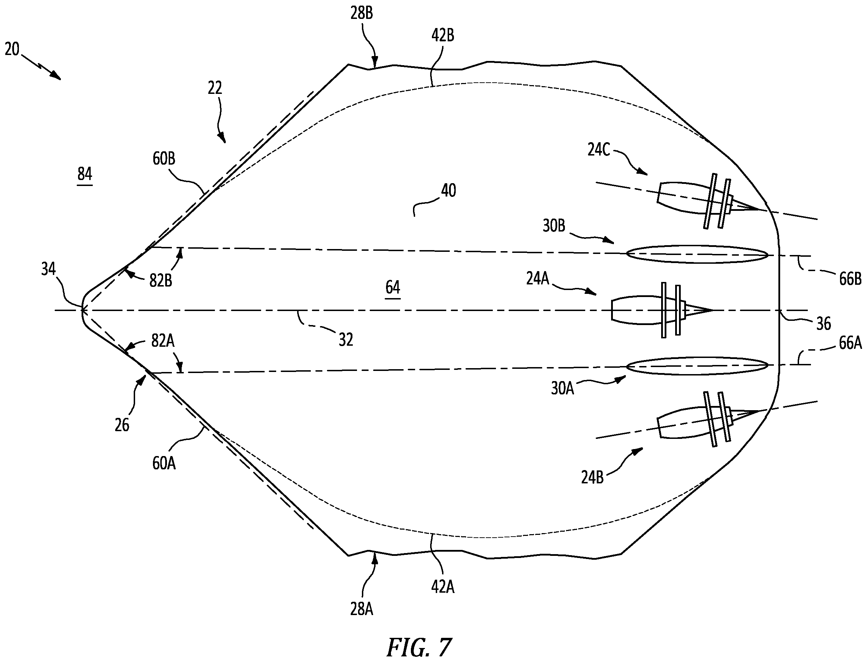

Referring to FIG. 6, at the base of each aircraft vane 30A, 30B, the vane forward end 68A, 68B is longitudinally spaced from the aircraft aft end 36 by a forward end vane offset distance 74A, 74B (generally referred to as "74"). A ratio of the forward end vane offset distance 74 to the wing span 48 (see FIG. 1) may be between 0.05 and 0.35 inclusive. Also at the base of each aircraft vane 30A, 30B, the vane aft end 70A, 70B is longitudinally spaced from the aircraft aft end 36 by an aft end vane offset distance 76A, 76B (generally referred to as "76"). A ratio of the aft end vane offset distance 76 to the wing span 48 (see FIG. 1) may be equal to or less than 0.20 or 0.10. At the vane forward end 68A, 68B, each vane centerline 66A, 66B is laterally spaced from the longitudinal centerline 32 by a lateral vane offset distance 78A, 78B (generally referred to as "78"). A ratio of the lateral vane offset distance 78 to the wing span 48 (see FIG. 1) may be between 0.03 and 0.10 inclusive. The vane centerline 66A, 66B of each aircraft vane 30A, 30B may be angularly offset from the longitudinal centerline 32 by a first vane offset angle 80A, 80B (generally referred to as "80"). This first vane offset angle 80 may be a non-zero acute angle equal to or less than thirty-five degrees (35°); e.g., between fifteen degrees (15°) and thirty degrees (30°) inclusive, or equal to or less than fifteen degrees (15°). The vane centerline 66A, 66B of each aircraft vane 30A, 30B may be angularly offset from the leading edge reference line 60A, 60B, at a common (the same) side of the longitudinal centerline 32, by a second vane offset angle 82A, 82B (generally referred to as "82"). This second vane offset angle 82 may be between eighty-five degrees (85°) and one-hundred and sixty degrees (160°) inclusive. The present disclosure, however, is not limited to such an exemplary arrangement. For example, referring to FIG. 7, the second vane offset angle 82 may be selected such that the vane centerline 66 of each aircraft vane 30 is parallel to the longitudinal centerline 32.

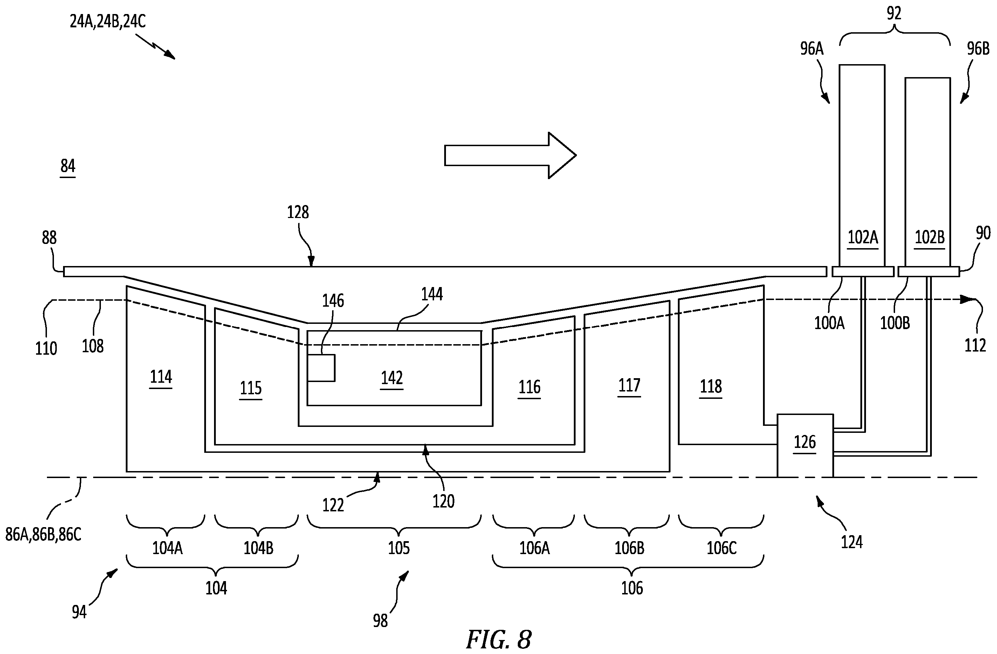

FIG. 8 illustrates an exemplary one of the aircraft propulsion systems 24. This aircraft propulsion system 24 of FIG. 8 is configured as an open rotor propulsion system. Herein, the term "open" may describe a propulsion system section and/or a propulsion system component which is open to an environment 84 (e.g., an ambient environment) external to the aircraft propulsion system 24 and, more generally, the BWB aircraft 20 (see FIGS. 1-3).

The aircraft propulsion system 24A, 24B, 24C of FIG. 8 extends axially along an axis 86A, 86B, 86C (generally referred to as "86") of the aircraft propulsion system 24A, 24B, 24C between an upstream, forward end 88 of the aircraft propulsion system 24 and a downstream, aft end 90 of the aircraft propulsion system 24. The propulsion system axis 86 may be a centerline of the aircraft propulsion system 24 and/or a centerline of one or more members of the aircraft propulsion system 24. The propulsion system axis 86 may also or alternatively be a rotational axis of one or more members of the aircraft propulsion system 24. The aircraft propulsion system 24 of FIG. 8 includes an open rotor propulsion section 92 (e.g., an open rotor propulsion module) and a power unit for powering operation of the propulsion section 92. For ease of description, the power unit is described below as a gas turbine engine 94. However, it is contemplated the power unit may also or alternatively be configured as or otherwise include an electric motor and/or another type of combustion engine.

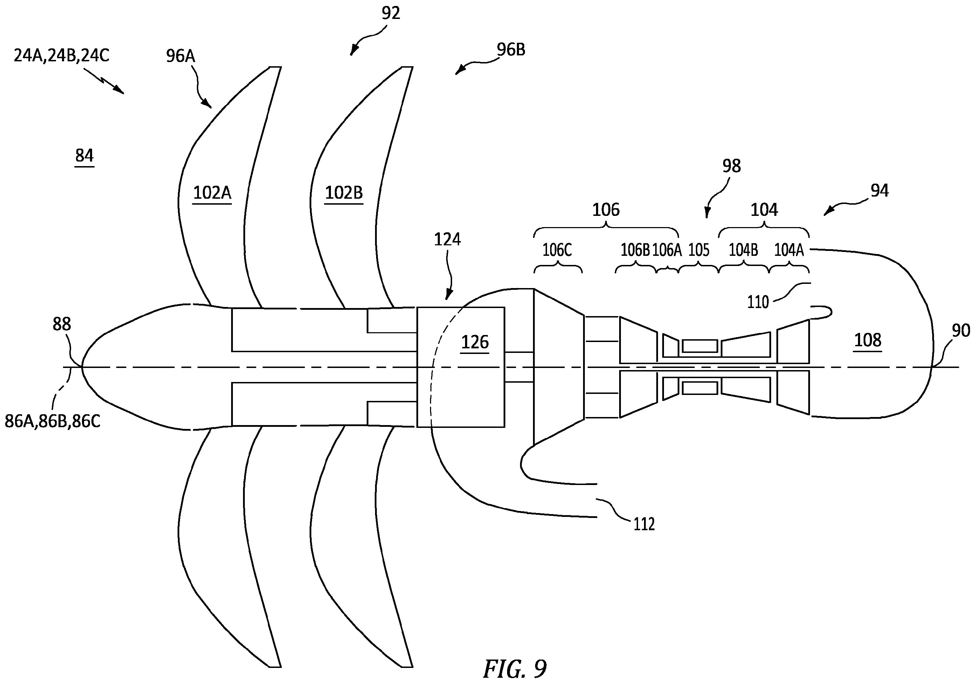

The propulsion section 92 of FIG. 8 includes one or more open propulsor rotors 96A and 96B (generally referred to as "96"). These propulsor rotors 96 of FIG. 8 are un-ducted components of the aircraft propulsion system 24 and its propulsion section 92. The propulsion section 92 and its propulsor rotors 96 of FIG. 8 are arranged at or towards the propulsion system aft end 90. The propulsion section 92 may thereby be arranged axially aft of a core 98 (e.g., a gas generator) of the turbine engine 94 with, for example, the propulsor rotors 96 axially between the propulsion system aft end 90 and the engine core 98. The present disclosure, however, is not limited to such an exemplary arrangement. For example, referring to FIG. 9, it is contemplated the propulsion section 92 and its propulsor rotors 96 may alternatively be arranged at or towards the propulsion system forward end 88. The propulsion section 92 may thereby be arranged axially forward of the engine core 98 with, for example, the propulsor rotors 96 axially between the propulsion system forward end 88 and the engine core 98. While the propulsion sections 92 of FIGS. 8 and 9 are shown with multiple of the propulsor rotors 96, it is contemplated either of these propulsion sections 92 may alternatively be configured with a single propulsor rotor with (or without) a swirl recovery vane (SRV) structure. Moreover, while the propulsion section 92 is described herein with an open rotor configuration, it is contemplated the propulsion section may alternatively have a ducted rotor configuration in select other embodiments. However, the arrangements of the present disclosure may be particularly beneficial for propulsion systems with open rotor propulsion sections.

Referring again to FIG. 8, each propulsor rotor 96 includes a rotor base 100A, 100B (generally referred to as "100") and a plurality of open propulsor blades 102A, 102B (generally referred to as "102"). The propulsor blades 102 are arranged and may be equispaced circumferentially about the respective rotor base 100 and the propulsion system axis 86 in an array; e.g., a circular array. This array of the propulsor blades 102 may be unshrouded or alternatively shrouded by a tubular propulsor rotor shroud dedicated to the propulsor rotor 96 for example. Each of the propulsor blades 102 is connected to (e.g., formed integral with or otherwise attached to) the respective rotor base 100. Each of the propulsor blades 102 projects spanwise along a span line of the respective propulsor blade 102 (e.g., radially relative to the propulsion system axis 86) out from an exterior surface of the respective rotor base 100, into the external environment 84, to a distal tip of the respective propulsor blade 102. Here, the exterior surface radially borders the external environment 84 and forms an inner platform surface of the respective propulsor rotor 96. Each propulsor blade 102 is thereby configured as an un-ducted propulsor blade which is exposed to (e.g., disposed in) the surrounding external environment 84.

The aircraft propulsion system 24 of FIG. 8 and its turbine engine 94 include a compressor section 104, a combustor section 105 and a turbine section 106. The compressor section 104 of FIG. 8 includes a low pressure compressor (LPC) section 104A and a high pressure compressor (HPC) section 104B. The turbine section 106 of FIG. 8 includes a high pressure turbine (HPT) section 106A, an intermediate pressure turbine (IPT) section 106B and a low pressure turbine (LPT) section 106C, which LPT section 106C of FIG. 8 is configured as a power turbine (PT) section for the propulsor rotors 96. At least (or only) the LPC section 104A, the HPC section 104B, the combustor section 105, the HPT section 106A and IPT section 106B collectively form the engine core 98. The aircraft propulsion system 24 of FIG. 8 and its turbine engine 94 also include an engine flowpath 108; e.g., an annular core flowpath. This engine flowpath 108 extends longitudinally through the engine core 98 as well as the LPT section 106C from an airflow inlet 110 into the engine flowpath 108 to a combustion products exhaust 112 from the engine flowpath 108. The flowpath inlet 110 of FIG. 8 is also an airflow inlet into the aircraft propulsion system 24 and its turbine engine 94. The flowpath exhaust 112 of FIG. 8 is also a combustion products exhaust from the aircraft propulsion system 24 and its turbine engine 94.

The LPC section 104A includes a bladed low pressure compressor (LPC) rotor 114. The HPC section 104B includes a bladed high pressure compressor (HPC) rotor 115. The HPT section 106A includes a bladed high pressure turbine (HPT) rotor 116. The IPT section 106B includes a bladed intermediate pressure turbine (IPT) rotor 117. The LPT section 106C includes a bladed low pressure turbine (LPT) rotor 118; e.g., a bladed power turbine (PT) rotor. Each of these engine rotors 114-118 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 108. Each of the rotor blades is connected to the respective rotor base. Each of the rotor blades projects radially (e.g., spanwise) out from the respective rotor base into the engine flowpath 108 and to a distal tip of the respective rotor blade.

The HPC rotor 115 is coupled to and rotatable with the HPT rotor 116. The HPC rotor 115 of FIG. 8, for example, is connected to the HPT rotor 116 by a high speed shaft. At least (or only) the HPC rotor 115, the HPT rotor 116 and the high speed shaft collectively form a high speed rotating structure 120; e.g., a high speed spool of the engine core 98.

The LPC rotor 114 is coupled to and rotatable with the IPT rotor 117. The LPC rotor 114 of FIG. 8, for example, is connected to the IPT rotor 117 by a low speed shaft. At least (or only) the LPC rotor 114, the IPT rotor 117 and the low speed shaft collectively form a low speed rotating structure 122; e.g., a low speed spool of the engine core 98.

Each of the propulsor rotors 96 is coupled to and rotatable with the LPT rotor 118. Each of the propulsor rotors 96 of FIG. 8, for example, is connected to the LPT rotor 118 by a propulsor-to-engine (PE) drivetrain 124. This PE drivetrain 124 may be configured as a geared drivetrain, where a geartrain 126 (e.g., a transmission, a speed change device, an epicyclic geartrain, etc.) is disposed between and operatively couples each propulsor rotor 96 to the LPT rotor 118. With this arrangement, each propulsor rotor 96 may rotate at a different (e.g., slower) rotational speed than the LPT rotor 118. The PE drivetrain 124 and its geartrain 126 may also be configured such that the propulsor rotors 96 rotate about the propulsion system axis 86 in opposite directions. The propulsor rotors 96 may thereby be configured as counterrotating propulsor rotors. The present disclosure, however, is not limited to such an exemplary arrangement.

The LPC section 104A, the HPC section 104B, the combustor section 105, the HPT section 106A, the IPT section 106B and the LPT section 106C may be arranged sequentially along the propulsion system axis 86. These engine sections 104A-106C are housed within a stationary housing structure 128. This housing structure 128 extends axially along (e.g., axially overlaps) and extends circumferentially about (e.g., circumscribes) the engine sections 104A-106C and the engine rotors 114-118. The housing structure 128 may also house at least a portion of the PE drivetrain 124 and its geartrain 126. With the foregoing arrangement, the engine rotors 114-118 are disposed within the housing structure 128. By contrast, the propulsor rotors 96 are disposed at least partially (or completely) outside of the housing structure 128 within the external environment 84.

Referring to FIG. 1, each aircraft propulsion system 24 is connected to a structure of the aircraft airframe 22. This airframe structure may include the aircraft body 26 and/or one or more of the aircraft wings 28. Each aircraft propulsion system 24 may also be located external to (e.g., outside of) the airframe structure and its members 26 and 28. Each aircraft propulsion system 24, for example, is disposed vertically above and is mounted (e.g., mechanically fixed) to the aircraft body 26 at (e.g., on, adjacent or proximate) the body top side 40 and, for example, the aircraft aft end 36. In particular, each aircraft propulsion system 24 may be mounted to the aircraft body 26 by a propulsion system pylon (not visible in FIG. 1).

The center propulsion system 24A of FIG. 1 is disposed laterally between the side propulsion systems 24B and 24C as well as laterally between the aircraft vanes 30A and 30B. More particularly, the center propulsion system 24A and its propulsion system axis 86A are laterally aligned with the longitudinal centerline 32. The propulsion system axis 86A of the center propulsion system 24A of FIG. 1 is also parallel to the longitudinal centerline 32. The center propulsion system 24A of FIG. 1 is longitudinally offset from the side propulsion systems 24B and 24C along the longitudinal centerline 32 towards the aircraft forward end 34. The center propulsion system 24A and its propulsion system forward end 88 are disposed a longitudinal distance from the aircraft forward end 34 which is (e.g., significantly) greater than a longitudinal distance between the center propulsion system 24A and its propulsion system aft end 90 and the aircraft aft end 36. The forward end 88 of the center propulsion system 24A, for example, is longitudinally spaced from the aircraft aft end 36 by a forward end center propulsion system (PS) distance 130. A ratio of the forward end center PS distance 130 to the wing span 48 may be between 0.5 and 0.40 inclusive.

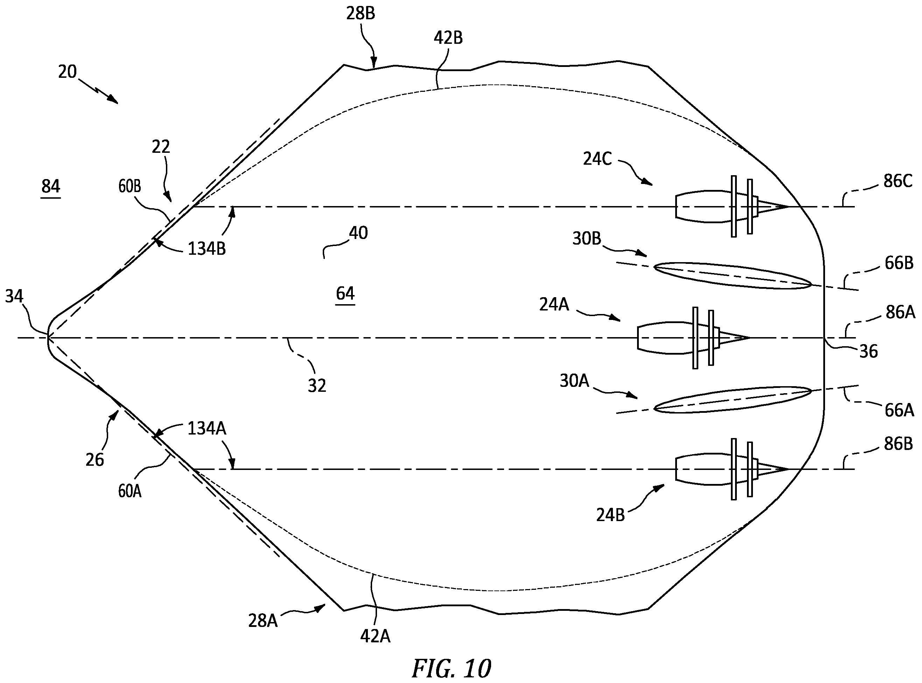

Referring to FIG. 6, the first side propulsion system 24B is disposed laterally to the first side of the longitudinal centerline 32. The second side propulsion system 24C is disposed laterally to the second side of the longitudinal centerline 32. Each side propulsion system 24 and its propulsion system axis 86 may be angularly offset from the center propulsion system 24A and its propulsion system axis 86A as well as the longitudinal centerline 32. The propulsion system axis 86B, 86C of each side propulsion system 24B, 24C of FIG. 6, for example, is angularly offset from the longitudinal centerline 32 by a first propulsion system offset angle 132A, 132B (generally referred to as "132"). This first propulsion system offset angle 132 may be a non-zero acute angle equal to or less than thirty-five degrees (35°); e.g., between fifteen degrees (15°) and thirty degrees (30°) inclusive, or equal to or less than fifteen degrees (15°). The propulsion system axis 86B, 86C of each side propulsion system 24B, 24C may also be angularly offset from the leading edge reference line 60A, 60B, at a common side of the longitudinal centerline 32, by a second propulsion system offset angle 134A, 134B (generally referred to as "134"). This second propulsion system offset angle 134 may be between eighty-five degrees (85°) and one-hundred and sixty degrees (160°) inclusive. The present disclosure, however, is not limited to such an exemplary arrangement. For example, referring to FIG. 10, the second propulsion system offset angle 134 may be selected such that the propulsion system axis 86B, 86C of one or more of the side propulsion system 24B, 24C is parallel to the longitudinal centerline 32.

Referring to FIG. 1, the forward end 88 of each side propulsion system 24B, 24C is longitudinally spaced from the aircraft aft end 36 by a forward end side propulsion system (PS) distance 136A, 136B (generally referred to as "136"). A ratio of the forward end side propulsion system distance 136 to the wing span 48 may be between 0.05 and 0.20 inclusive. The aft end 90 of each side propulsion system 24B, 24C is longitudinally spaced from the aircraft aft end 36 by an aft end side propulsion system (PS) distance 138A, 138B (generally referred to as "138"). A ratio of the aft end side propulsion system distance 138 to the wing span 48 may be equal to or less than 0.05 or 0.01. Referring to FIG. 6, at the propulsion system forward end 88, the propulsion system axis 86B, 86C of each side propulsion system 24B, 24C is laterally spaced from the longitudinal centerline 32 by a lateral side propulsion system (PS) offset distance 140A, 140B (generally referred to as "140"). A ratio of the lateral side PS offset distance 140 to the wing span 48 (see FIG. 1) may be between 0.05 and 0.15 inclusive.

A mathematical difference between the forward end vane offset distance 74 and the aft end vane offset distance 76 is equal to a first difference value. Referring to FIG. 1, a mathematical difference between the forward end side propulsion system distance 136 and the aft end side propulsion system distance 138 is equal to a second difference value. In some embodiments, this second difference value may be equal to or greater than the first difference value. In other embodiments, the second difference value may alternatively be equal to or less than the first difference value.

Referring to FIG. 8, during forward thrust aircraft operation, a flow of ambient air from the external environment 84 is directed into each aircraft propulsion system 24 and its turbine engine 94 through the flowpath inlet 110. The air entering the engine flowpath 108 through the flowpath inlet 110 may be referred to as "core air". This core air is compressed by the LPC rotor 114 and the HPC rotor 115 and directed into a combustion chamber 142 (e.g., an annular combustion chamber) of a combustor 144 (e.g., an annular combustor) in the combustor section 105. Fuel is injected into the combustion chamber 142 by one or more fuel injectors 146 and mixed with the compressed core air to provide a fuel-air mixture. This fuel-air mixture is ignited and combustion products thereof flow through and sequentially drive rotation of the HPT rotor 116, the IPT rotor 117 and the LPT rotor 118. The rotation of the HPT rotor 116 and the IPT rotor 117 respectively drive rotation of the HPC rotor 115 and the LPC rotor 114 and, thus, power the compression of the core air. The rotation of the LPT rotor 118 drives the rotation of the propulsor rotors 96 through the PE drivetrain 124 and its geartrain 126. The turbine engine 94 and its LPT rotor 118 thereby power operation of (e.g., drive rotation of) the propulsion section 92 during aircraft propulsion system operation. The rotation of the propulsor rotors 96 propels another flow of the ambient air outside of the respective aircraft propulsion system 24 in a downstream, aft direction towards the aircraft aft end 36 of FIG. 1 providing the BWB aircraft 20 with forward thrust.

Without mitigation, airflow stream tube convergence of the turbulent air propelled by the propulsor rotors 96 (see FIG. 8) may contribute to flow separation along the exterior surface 64 of the aircraft body 26 at the body top side 40 near the aircraft aft end 36 (see FIG. 1). This phenomena may be particularly prevalent at relatively slow aircraft air speeds such as, for example, during aircraft takeoff and/or beginning of aircraft climb. To reduce or prevent such flow separation along the exterior surface 64, the aircraft propulsion systems 24 may be arranged as described herein with the aircraft vanes 30. The aircraft vanes 30, in particular, may be operable to straighten out a streamline of the air propelled by each aircraft propulsion system 24. These aircraft vanes 30 may also be configured to provide inter-propulsion system protection in an unlikely occurrence of a blade out event or the like.

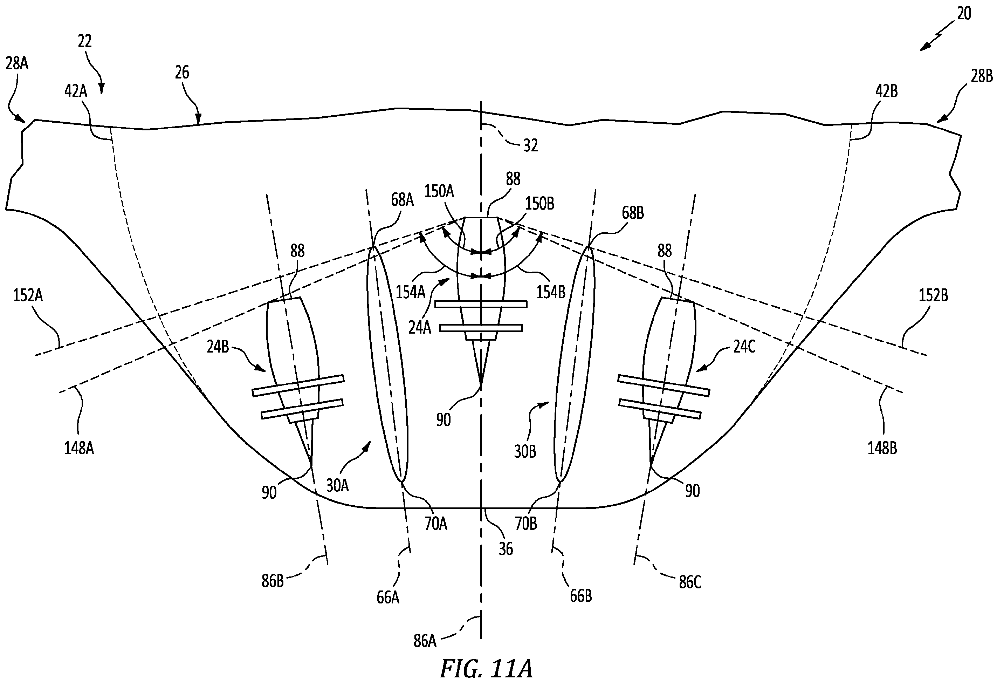

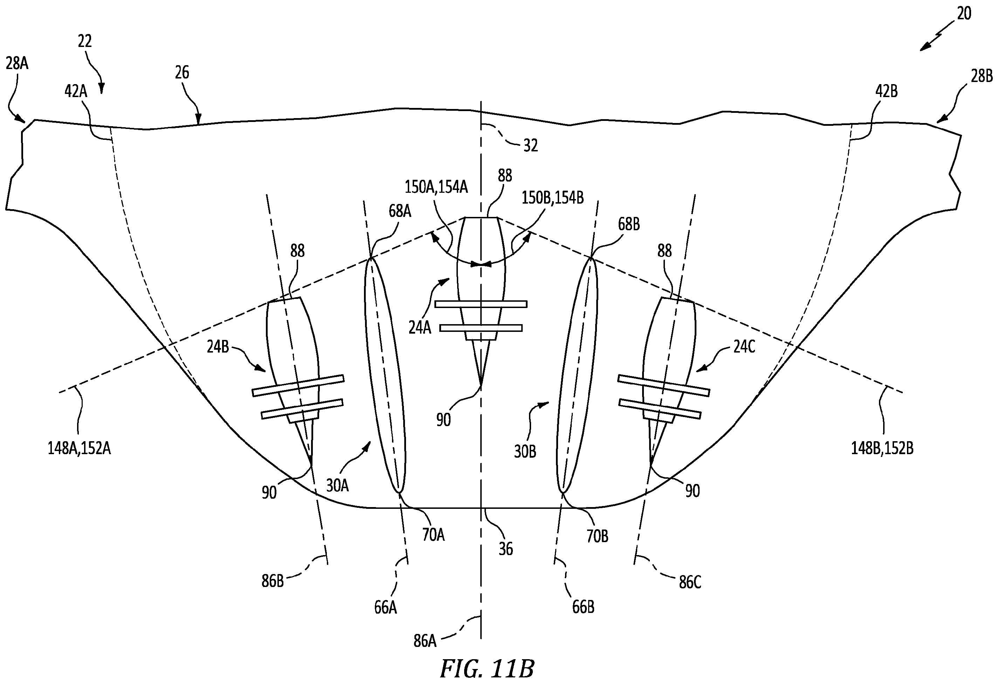

Referring to FIGS. 11A and 11B, a straight-line engine-to-engine reference line 148A, 148B (generally referred to as "148") projects out from the center propulsion system 24A at its propulsion system forward end 88 to a respective one of the side propulsion systems 24B and 24C at its propulsion system forward end 88, in a reference plane which includes those engine-to-engine reference lines 148. Here, each engine-to-engine reference line 148 is shown as being coincident with a respective corner of the center propulsion system 24A at its propulsion system forward end 88 and a respective corner of the respective side propulsion systems 24B and 24C at its propulsion system forward end 88. However, with other arrangements and/or other propulsion system configurations, it is contemplated the engine-to-engine reference line 148 may be coincident with one or more of the aircraft propulsion systems 24 at a lateral center aligned with its propulsion system axis 86. Referring again to FIGS. 11A and 11B, each engine-to-engine reference line 148A, 148B is angularly offset from the longitudinal centerline 32 by an offset angle 150A, 150B (generally referred to as "150"); e.g., an engine-to-engine sweep angle. This offset angle 150 may be between thirty degrees (30°) and ninety degrees (90°) inclusive; e.g., between fifty degrees (50°) and eighty degrees (80°) inclusive. In some embodiments, referring to FIG. 11B, each engine-to-engine reference line 148A, 148B may also be coincident with a respective one of the aircraft vanes 30A, 30B at its vane forward end 68A, 68B in the reference plane. In other embodiments, referring to FIGS. 11A, each engine-to-engine reference line 148A, 148B may be longitudinally offset from the respective aircraft vane 30A, 30B at its vane forward end 68A, 68B in the reference plane.

Referring again to FIGS. 11A and 11B, a straight-line engine-to-vane reference line 152A, 152B (generally referred to as "152") projects out from the center propulsion system 24A at its propulsion system forward end 88 to a respective one of the aircraft vanes 30A, 30B at its vane forward end 68A, 68B, in the reference plane which includes those engine-to-vane reference lines 152. Here, each engine-to-vane reference line 152 is shown as being coincident with a respective corner of the center propulsion system 24A at its propulsion system forward end 88. However, with other arrangements and/or other center propulsion system configurations, it is contemplated the engine-to-vane reference line 152 may be coincident with the center propulsion system 24A at the lateral center aligned with its propulsion system axis 86A. Referring again to FIGS. 11A and 11B, each engine-to-vane reference line 152A, 152B is angularly offset from the longitudinal centerline 32 by an offset angle 154A, 154B (generally referred to as "154"); e.g., an engine-to-vane sweep angle. This offset angle 154 may be between thirty degrees (30°) and ninety-five degrees (95°) inclusive; e.g., between fifty degrees (50°) and eighty-five degrees (85°) inclusive.

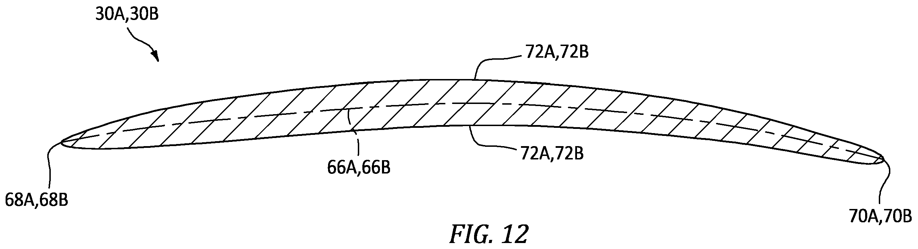

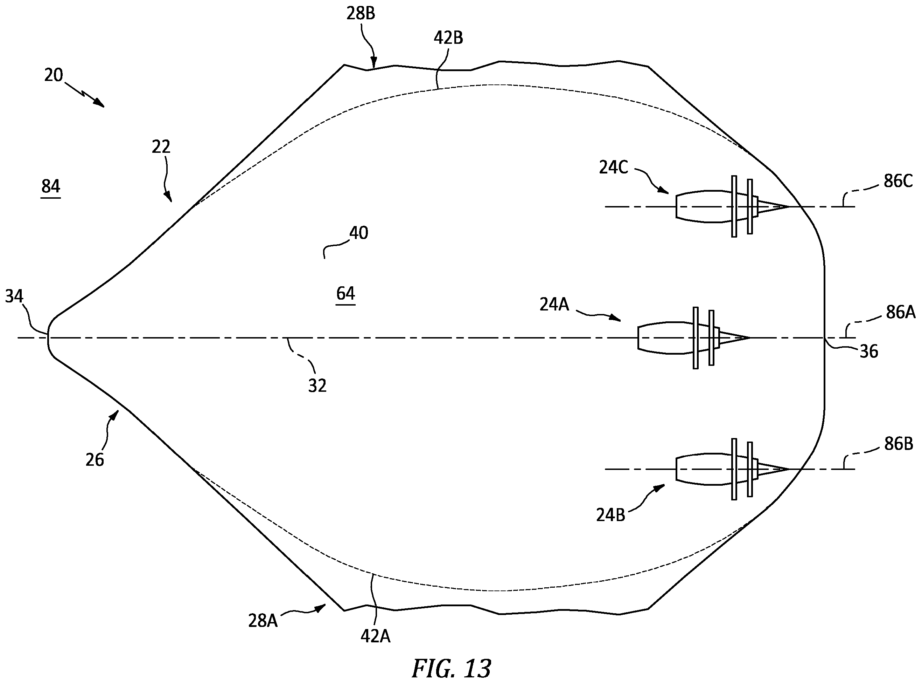

In some embodiments, referring to FIG. 5, each aircraft vane 30 may be symmetric with substantially no camber. In other embodiments, referring to FIG. 12, each aircraft vane 30 may be cambered. Moreover, while an entirety of each aircraft vane 30 is described above as stationary, it is contemplated each aircraft vane 30 may alternatively include an adjustable portion; e.g., a rudder at the vane aft end 70. In still other embodiments, referring to FIG. 13, it is contemplated the BWB aircraft 20 and its aircraft airframe 22 may alternatively be configured without any of the aircraft vanes described above.

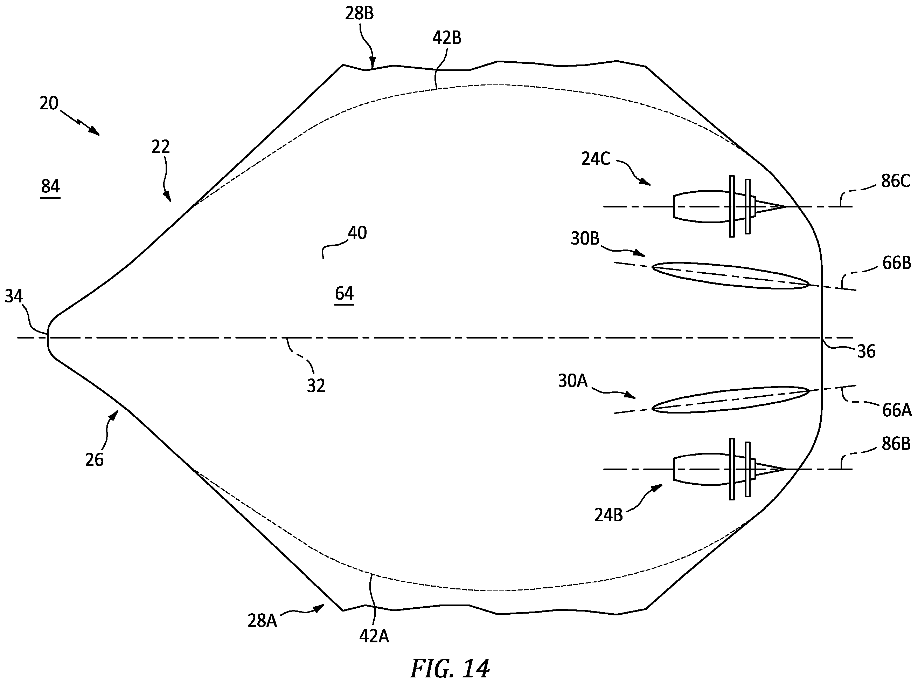

The BWB aircraft 20 is described above with three (3) of the aircraft propulsion systems 24A-C. The present disclosure, however, is not limited to such a tri-propulsion system arrangement. For example, referring to FIG. 14, the BWB aircraft 20 may alternatively be configured with two (2) of the aircraft propulsion systems 24B and 24C along with the one or more aircraft vanes 30A and 30B. In particular, the BWB aircraft 20 of FIG. 14 is configured without the center propulsion system. In another example, the BWB aircraft 20 may include four (4) or more of the aircraft propulsion systems 24.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An aircraft system, comprising:
an airframe including a body, a first wing and a second wing, wherein the body extends longitudinally along a longitudinal centerline from a forward end of the airframe to an aft end of the airframe, the first wing is connected to the body at a first side of the body, and the second wing is connected to the body at a second side of the body that is laterally opposite the first side of the body;
a first side propulsion system mounted to the airframe to a first side of the longitudinal centerline;
a second side propulsion system mounted to the airframe to a second side of the longitudinal centerline that is laterally opposite the first side of the longitudinal centerline; and
a center propulsion system mounted to the airframe and laterally aligned with the longitudinal centerline, wherein the center propulsion system is longitudinally offset from the first side propulsion system and the second side propulsion system towards the forward end of the airframe, and a longitudinal distance between the center propulsion system and the forward end of the airframe is greater than a longitudinal distance between the center propulsion system and the aft end of the airframe.

2. The aircraft system of claim 1, wherein the airframe is configured as a blended wing body airframe.

3. The aircraft system of claim 1 or 2, wherein the center propulsion system is mounted to the body.

4. The aircraft system of any preceding claim, wherein the first side propulsion system and the second side propulsion system are mounted to the body.

5. The aircraft system of any preceding claim, wherein at least one of the first side propulsion system, the second side propulsion system or the center propulsion system comprises an open propulsor rotor.

6. The aircraft system of any preceding claim, wherein a centerline of the center propulsion system is parallel with:
a centerline of the first side propulsion system; and/or
a centerline of the second side propulsion system.

7. The aircraft system of any preceding claim, wherein:
a centerline of the first side propulsion system is angularly offset from the longitudinal centerline by a first acute offset angle equal to or less than thirty-five degrees; and/or
a centerline of the second side propulsion system is angularly offset from the longitudinal centerline by a second acute offset angle equal to or less than thirty-five degrees.

8. The aircraft system of any preceding claim, wherein:
the airframe has a wing span measured laterally between a tip of the first wing and a tip of the second wing;
an aft end of the first side propulsion system is longitudinally spaced from the aft end of the airframe by a first longitudinal distance;
an aft end of the second side propulsion system is longitudinally spaced from the aft end of the airframe by a second longitudinal distance; and
the first longitudinal distance divided by the wing span is equal to or less than 0.01; and/or
the second longitudinal distance divided by the wing span is equal to or less than 0.01.

9. The aircraft system of any preceding claim, wherein:
the airframe has a or the wing span measured laterally between a or the tip of the first wing and a or the tip of the second wing;
a centerline of the center propulsion system is laterally spaced from a centerline of the first side propulsion system by a first lateral distance;
a centerline of the center propulsion system is laterally spaced from a centerline of the second side propulsion system by a second lateral distance; and
the first lateral distance divided by the wing span is between 0.05 and 0.15; and/or the second lateral distance divided by the wing span is between 0.05 and 0.15.

10. The aircraft system of any preceding claim, wherein the airframe further includes:
a first vane disposed laterally between the first side propulsion system and the center propulsion system, and the first vane longitudinally overlaps the first side propulsion system and the center propulsion system; and/or
a second vane disposed laterally between the second side propulsion system and the center propulsion system, and the second vane longitudinally overlaps the first side propulsion system and the center propulsion system.

11. The aircraft system of claim 10, wherein:
a centerline of the first vane is parallel with a centerline of the second vane; or
a centerline of the first vane is angularly offset from the longitudinal centerline by a first acute offset angle equal to or less than thirty-five degrees; and/or
a centerline of the second vane is angularly offset from the longitudinal centerline by a second acute offset angle equal to or less than thirty-five degrees.

12. The aircraft system of claim 10 or 11, wherein:
the airframe has a or the wing span measured laterally between a or the tip of the first wing and a or the tip of the second wing;
an aft end of the first vane is longitudinally spaced from the aft end of the airframe by a first longitudinal distance;
an aft end of the second vane is longitudinally spaced from the aft end of the airframe by a second longitudinal distance; and
the first longitudinal distance divided by the wing span is equal to or less than 0.10; and/or
the second longitudinal distance divided by the wing span is equal to or less than 0.10.

13. The aircraft system of any of claims 10 to 12, wherein:
a forward end of the first vane is longitudinally spaced from the aft end of the airframe by a forward end vane offset distance;
a or the aft end of the first vane is longitudinally spaced from the aft end of the airframe by an aft end vane offset distance, and a difference between the forward end vane offset distance and the aft end vane offset distance is equal to a first difference value;
a forward end of the first side propulsion system is longitudinally spaced from the aft end of the airframe by a forward end propulsion system offset distance;
a or the aft end of the first side propulsion system is longitudinally spaced from the aft end of the airframe by an aft end propulsion system offset distance, and a difference between the forward end propulsion system offset distance and the aft end propulsion system offset distance is equal to a second difference value; and
the second difference value is greater than the first difference value.

14. The aircraft system of any of claims 10 to 13, wherein:
the airframe has a or the wing span measured laterally between a or the tip of the first wing and a or the tip of the second wing;
a or the centerline of the first vane is laterally spaced from the longitudinal centerline by a first lateral distance;
a or the centerline of the second vane is laterally spaced from the longitudinal centerline by a second lateral distance; and
the first lateral distance divided by the wing span is between 0.03 and 0.10; and/or
the second lateral distance divided by the wing span is between 0.03 and 0.10.

15. The aircraft system of any of claims 10 to 14, wherein:
a first reference line is coincident with a forward end of the center propulsion system, a forward end of the first side propulsion system and a or the forward end of the first vane in a reference plane including the first reference line; and/or
a second reference line is coincident with a forward end of the center propulsion system, a forward end of the second side propulsion system and a or the forward end of the second vane in the reference plane including the second reference line; or
a first reference line is coincident with a forward end of the center propulsion system and a forward end of the first side propulsion system in a reference plane including the first reference line, and a or the forward end of the first vane is longitudinally offset from the first reference line in the reference plane; and/or
a second reference line is coincident with a forward end of the center propulsion system and a forward end of the second side propulsion system in the reference plane including the second reference line, and a or the forward end of the second vane is longitudinally offset from the second reference line in the reference plane.
